# EUROPEAN PATENT SPECIFICATION

(11) **EP 3 729 907 B1**
(45) Date of publication and mention of the grant of the patent: **16.04.2025**
(21) Application number: 18891113.5
(22) Date of filing: 19.12.2018
(51) Int. Cl.: H04W 12/03, H04W 12/088, H04W 76/12, H04W 28/10, H04W 28/12, H04W 28/02, H04L 9/40

(54) **TUNNEL FILTERING SYSTEM AND METHOD**
TUNNELFILTERSYSTEM UND -VERFAHREN
SYSTÈME ET PROCÉDÉ DE FILTRAGE PAR TUNNEL

(30) Priority: 19.12.2017 US 201762607440 P
(43) Date of publication of application: 28.10.2020
(73) Proprietor: Radio IP Software Inc., Longueuil, Québec J4K 5G4 (CA)
(72) Inventor: LATULIPPE, Francis, Mont St-Hilaire, Québec J3H 4Y8 (CA); RACETTE, Philippe, Montréal, Québec H4H 1L9 (CA); EL FEGHALY, Chady, Laval, Québec H7W 4Z8 (CA); BOUCHARD, Laurent, Montréal, Québec H1W 1P6 (CA)
(74) Representative: Vossius & Partner Patentanwälte Rechtsanwälte mbB
(86) International application number: PCT/CA2018/051622
(87) International publication number: WO 2019/119130

(56) References cited:
- WO-A1-2012/160465
- WO-A2-2014/036338
- US-A1- 2013 157 661
- US-A1- 2017 006 034
- US-A1- 2017 063 782

## Description

### FIELD OF THE INVENTION

The present invention relates to a tunnel filtering system and method.

### BACKGROUND TO THE INVENTION

WO 2014/036338 A2 describes a system within which an access network detects Quality of Service (QoS) links for both Internet Protocol (IP) Multimedia Subsystem (IMS) sessions and non-IMS sessions where the non-IMS sessions is recognized as being associated with a particular application type. WO 2012/160465 A1 discloses a method of implementing a control plane of an evolved packet core (EPC) in a cloud computing system using the OpenFLow protocol. Existing mobile networks provide for the transmission of data between a mobile device and the ground via a plurality of connections which deliver predefined quality of service, including a relative priority amongst others. As all connections use the same wireless media for transfer, in times of heavy traffic load or the like the amount of available capacity can become quickly exhausted. In such cases, connections having a particular service attribute, such as a lower priority, may be dropped in order to maintain the continued correct operation of connections having a different service attribute, for example those with a higher priority.

Security services such as the police and fire departments typically share at least some of their communications resources, for example via private cell phone networks or the like, with the public or others. During crisis situations the usage of all these parties increases which quickly leads to the resources becoming exhausted. However, during such crisis situations security services have an increased reliance on such communications in order to correctly understand and deal quickly and effectively with the crises. One method of reducing congestion under such circumstances would be to refuse transmission of one or other type of data. For example streaming video requires a large amount of data and limiting or prohibiting its transmission during crisis situations could significantly reduce the probability of congestion. Security services, however, typically encrypt data during transmission, for example via a secure virtual private network (VPN) connection or the like. As such, it is impossible to tell the type of data being transmitted. Additionally, cell phone networks are typically not under control of the security services.

What is needed therefore, and one object of the present is a system and method which allows for at least some of the connections supporting secured communications to be dropped while maintaining others while providing control over which type of data is being transmitted via the remaining secured connections to those using the secured communications.

### SUMMARY OF THE INVENTION

The invention is defined in the independent claims. Dependent claims describe preferred embodiments. In order to address the above and other drawbacks, there is provided a tunnel filtering system comprising a wireless network comprising at least one base station and a packet data network gateway interconnecting the wireless network to a public network, at least one user equipment comprising a Virtual Private Network (VPN) client and at least one mobile application, a wireless radio connection interconnecting the at least user equipment and the base station, an EPS session interconnecting each of the at least one user equipment and the packet data network gateway via the wireless radio connection, each of the of EPS session identified by an IP address of the interconnected user equipment wherein each of the EPS session comprises a default EPS bearer and a plurality of dedicated EPS bearers identified by an EPS bearer ID, a VPN gateway connected to the public network and comprising a gateway IP address, and at least one application server comprising at least one server application, wherein a plurality of VPN tunnels interconnect each of the VPN client with the VPN gateway, each of the VPN tunnels comprising a user equipment IP address, a VPN gateway IP address and a known port, wherein data transmission via one of the VPN tunnels is supported by an associated one of the EPS bearers, and a set of filters shared between a first routing function in each of the at least one user device and a second routing function in the VPN gateway, each of the filters used by the first and second routing functions to direct a particular one of a plurality of data types to a first specified one of the plurality of VPN tunnels. A communicating one of the at least one mobile application communicates data of the particular data type with a communicating one of the at least one server application via the first specified VPN tunnel and a first associated EPS bearer and further wherein when the first associated EPS bearer and the first specified VPN tunnel are no longer available, at least one of the set of filters is modified such that the particular data type is associated with a second specified one of the VPN tunnels wherein the communicating mobile application communicates the data of said particular data type subsequently with the communicating server application via the second specified VPN tunnel and a second associated EPS bearer.

There is also provided a method for securely interconnecting at least one mobile application executing on a mobile device comprising a Virtual Private Network (VPN) client with an application server via a wireless radio connection established between the mobile device and a base station of a wireless network comprising a packet data network gateway interconnecting the wireless network to a public network comprising a VPN gateway comprising a gateway IP address. The method comprises opening an EPS session interconnecting the mobile device and the packet data network gateway via the wireless radio connection, each of the of EPS session identified by an IP address of the interconnected user equipment wherein each of the EPS session comprises a default EPS bearer and a plurality of dedicated EPS bearers identified by an EPS bearer ID, establishing a plurality of Virtual Private Network (VPN) tunnels between the VPN client and the VPN gateway, each of the VPN tunnels comprising a user equipment IP address, the gateway IP address and a known port wherein data transmission via one of the VPN tunnels is provided between the mobile device and the packet data network gateway by a respective one of the EPS bearers, sharing a set of filters between a first routing function in the mobile device and a second routing function in the VPN gateway, each of the filters used by the first and second routing functions to direct a particular data type to a first specified one of the plurality of VPN tunnels, transmitting data of the particular data type between the mobile application and the application server using the first specified VPN tunnel, modifying at least one of the shared filters such that the particular data type is directed to a second specified one of the VPN tunnels, and transmitting data of the particular data type between the mobile application and the application server using the second specified VPN tunnel.

Additionally, there is provided a non-transitory computer readable medium storing a program causing a microprocessor to execute a process on a mobile device comprising a storage device, a Virtual Private Network (VPN) client with an application server via a wireless radio connection established between the mobile device and a base station of a wireless network comprising a packet data network gateway interconnecting the wireless network to a public network comprising a VPN gateway comprising a gateway IP address. The process comprises opening an EPS session interconnecting the mobile device and the packet data network gateway via the wireless radio connection, each of the of EPS session identified by an IP address of the interconnected user equipment wherein each of the EPS session comprises a default EPS bearer and a plurality of dedicated EPS bearers identified by an EPS bearer ID, establishing a plurality of Virtual Private Network (VPN) tunnels between the VPN client and the VPN gateway, each of the VPN tunnels comprising a user equipment IP address, the gateway IP address and a known port wherein data transmission via one of the VPN tunnels is provided between the mobile device and the packet data network gateway by a respective one of the EPS bearers, storing a set of filters in the storage device, each of the filters directing a particular data type to a first specified one of the plurality of VPN tunnels, routing data of the particular data type for transmission between the mobile application and the application server according to the filters to the first specified VPN tunnel, modifying at least one of the shared filters such that the particular data type is directed to a second specified one of the VPN tunnels, and routing data of the particular data type for transmission between the mobile application and the application server according to the filters to the second specified VPN tunnel.

### BRIEF DESCRIPTION OF THE DRAWINGS

Figure 1 is block diagram of a tunnel filtering system in accordance with an illustrative embodiment of the present invention;
Figure 2A is a block diagram of a wireless network in accordance with an illustrative embodiment of the present invention;
Figure 2B is a flow chart of a bearer setup procedure in accordance with an illustrative embodiment of the present invention; and
Figure 3 is a schematic diagram of a tunnel filtering system in accordance with an illustrative embodiment of the present invention.

### DETAILED DESCRIPTION OF THE ILLUSTRATIVE EMBODIMENTS

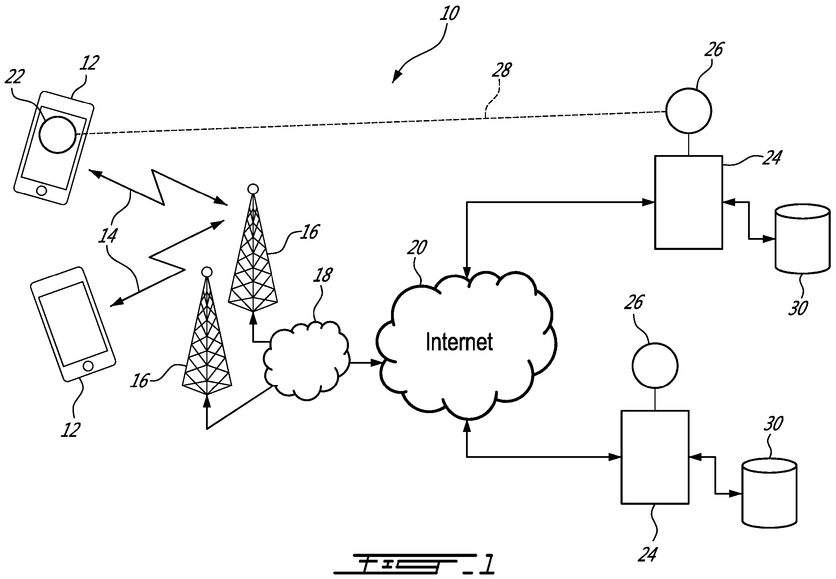

Referring now to Figure 1, a tunnel filtering system in accordance with an illustrative embodiment of the present invention, and generally referred to using the reference numeral 10, will now be described. The System comprises a plurality of mobile devices/user equipment (UE) 12 which communicate via a wireless communication network 14, such as GSM, 3GPP, 4G LTE or the like. In one embodiment the wireless network 14 provides data communications via a plurality of base stations 16/wireless network 18, such as an LTE network or the like, connected to a Wide Area Network (WAN) such as the Internet 20 for one or more mobile applications 22 running on the UE 12 and such that the mobile application 22 can communicate with one of a plurality of application servers 24 which is situated remote from the UE 12 and on which is running a server application 26. Typically, this is done using TCP/IP and the like which support *inter alia* the establishment of a TCP/IP connection 28 for transmission of data between the mobile application 22 and the application server 24. The mobile device/UE 12 illustratively comprises a microprocessor or the like (not shown) and the one or mobile applications 22 are stored in a computer readable storage medium (also not shown) on the UE 12 for execution as a process by the microprocessor. In a particular embodiment the application server 24 may comprise a storage repository 30 comprising data which may be accessed by the mobile application 22.

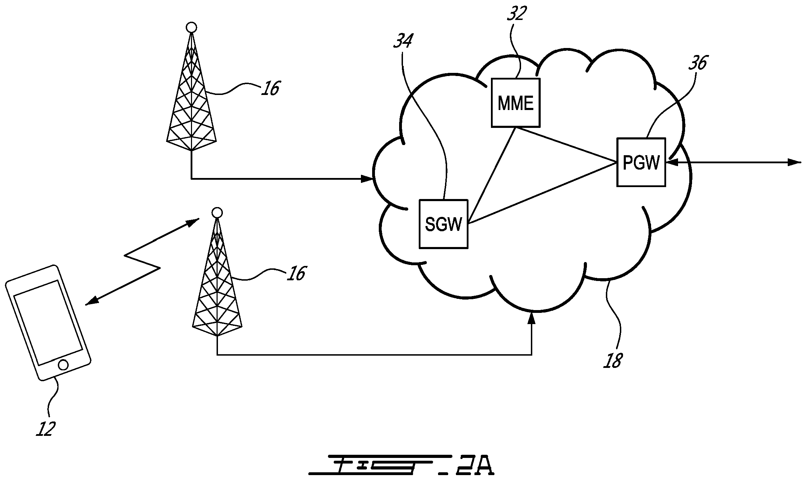

Referring now to Figure 2A in addition to Figure 1, the wireless network 18 comprises *inter alia* three (3) components which work in concert to establish and maintain connections for UEs 12 and such that they can communicate with application servers 24 and the like via the Internet 20: A Mobility Management Entity (MME) 32; a Serving Gateway (SGW) 34; and a Packet Data Network Gateway (PGW) 36. The MME is a control node which manages the wireless network 18 by providing for UE authentication, orchestrating handovers between different LTE networks, and bearer management. The SGW 34 provides an interface towards the UEs 12 via the base stations 16. The SGW 34 is responsible for handovers between neighbouring base stations 16 as well as for data transfer. Each SGW 34 also monitors and maintains context information related to a UE 12 during a UE's idle state and generates paging requests when downlinked data is received from the UE 12. The PGW 36 provides the interconnection with external data networks such as the Internet 20. The PGW 36 manages policy enforcement, packet filtering, provides billing support and the like. The PGW 36 also allocates IP addresses to the UEs 12.

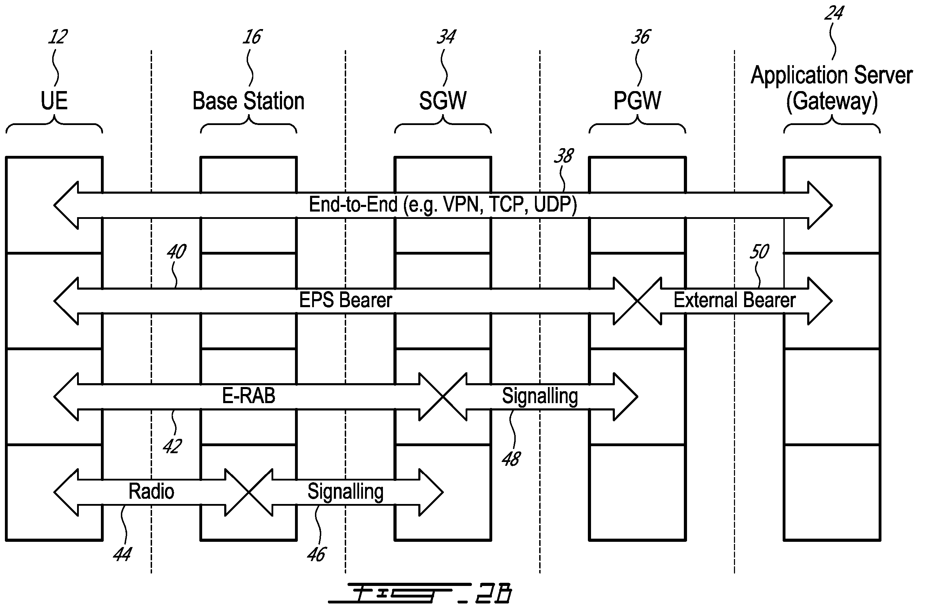

Referring now to Figure 2B in addition to Figure 1, in order to exchange data between a mobile application 22 running on the UE 12 and a server application 26 running on the Application Server 24, an end-to-end type connection 38 is established between the UE 12 and the Application Server 24. In a particular embodiment at least a portion of this connection 24 comprises a Virtual Private Network (VPN) type connection which allows data to be transmitted between the UE 12 and the Application Server24 in a secure fashion. As will be understood by a person of ordinary skill in the art, in a particular embodiment the point of termination of the VPN at the Application Server 24 side may be at a corporate gateway or the like (not shown) which provides for example an interface between the Application Server 24 and the Internet 20.

Still referring to Figure 2B in addition to Figure 1, other layers in the UE protocol stack are used to support the transmission of data via the end-to-end connection. Indeed, data packets which are transmitted via the end-to-end connection are transmitted between the UE 12 and the PGW 36 via one or more Evolved Packet System (EPS) bearers 40 and in turn transmitted between the UE 12 and the SGW 34 via an Enhanced Radio Access Bearer (E-RAB) 42. Similarly, data transmitted via the E-RAB 42 are transmitted between the UE 12 and the base station 16 via a radio bearer 44. Additional system internal signalling bearers 46 and 48 are provided as well as external bearers 50 for communicating via the Internet 20.

Still referring to Figure 2B in addition to Figure 1, in order to establish a communication path (or attach to the wireless network 18), for example on power up of the UE 12, using system information received from the base station 16 a UE 12 establishes a Radio Resource Control (RRC) connection to the base station 16 via the radio bearer 44. The base station 16 also communicates with the MME 32 in order to authenticate the UE 12. Once the UE 12 is authenticated by the MME 32 a default EPS bearer 40 is established between the UE 12 and the PGW 36. The default EPS bearer 40 is assigned an IP address by the PGW 36. A default EPS bearer is assigned when the UE 12 attaches to the wireless network 18 for the first time, and is maintained as long as UE 12 is attached to the wireless network 18. The default EPS bearer provides a best effort service in that bit rate is not guaranteed. Of note is that a UE 12 may have additional default EPS bearers 40 which are identified using their own IP addresses. Additional default EPS bearers can be useful in situations where different type of communications require a different delivery network to be accessed by the PGW 36, such as Internet Messaging Service (IMS) traffic on a first default EPS bearer and other Internet traffic on a second default EPS bearer.

Still referring to Figure 2B, once attached each EPS bearer 40 provides a virtual connection between the UE 12 and the PGW 36 and provides a data transmission service to which may be associated one or more quality of service (QoS) parameters, such as QoS Class Identifier (QCI), Allocation and Retention Priority (ARP), Guaranteed Bit Rate (GBR) and Aggregate Maximum Bit Rate (AMBR).

Still referring to Figure 2B, In addition to the default EPS bearer 40, other dedicated EPS bearers 40 can be established between the UE 12 and the PGW 36 and to each of which may be assigned a different set of QoS parameters. Each of the dedicated EPS bearers 40 has the same IP address as the default EPS bearer 40 (although in a particular embodiment additional default EPS bearers 40 may be established having a different IP address). The Dedicated EPS bearers 40 are typically used to provide a dedicated communication tunnel between UE 12 and PGW 36 to which is dedicated a particular type of traffic, such as Voice Over IP (VOIP), streaming video or the like. A typical set of EPS bearers 40 might include one (1) default EPS bearer and eight (8) dedicated EPS bearers each assigned a unique QCI as follows:

| EPS Bearer | QCI | Resource Type | Priority | Packet Delay Budget (ms) | Packet Error Loss Rate | Example |
|---|---|---|---|---|---|---|
| Default | 9 | Non-GBR | 9 | 300 | 10⁻⁶ | TCP Based |
| Dedicated 1 | 8 | Non-GBR | 8 | 300 | 10⁻⁶ | TCP Based |
| Dedicated 2 | 7 | Non-GBR | 7 | 100 | 10⁻³ | Voice, Video, interactive gaming |
| Dedicated 3 | 6 | Non-GBR | 6 | 300 | 10⁻⁶ | Video |
| Dedicated 4 | 5 | Non-GBR | 1 | 100 | 10⁻⁶ | IMS Signalling |
| Dedicated 5 | 4 | GBR | 5 | 300 | 10⁻⁶ | Buffered streaming |
| Dedicated 6 | 3 | GBR | 3 | 50 | 10⁻³ | Real-time gaming |
| Dedicated 7 | 2 | GBR | 4 | 150 | 10⁻³ | Live streaming |
| Dedicated 8 | 1 | GBR | 2 | 100 | 10⁻² | Conversational voice |

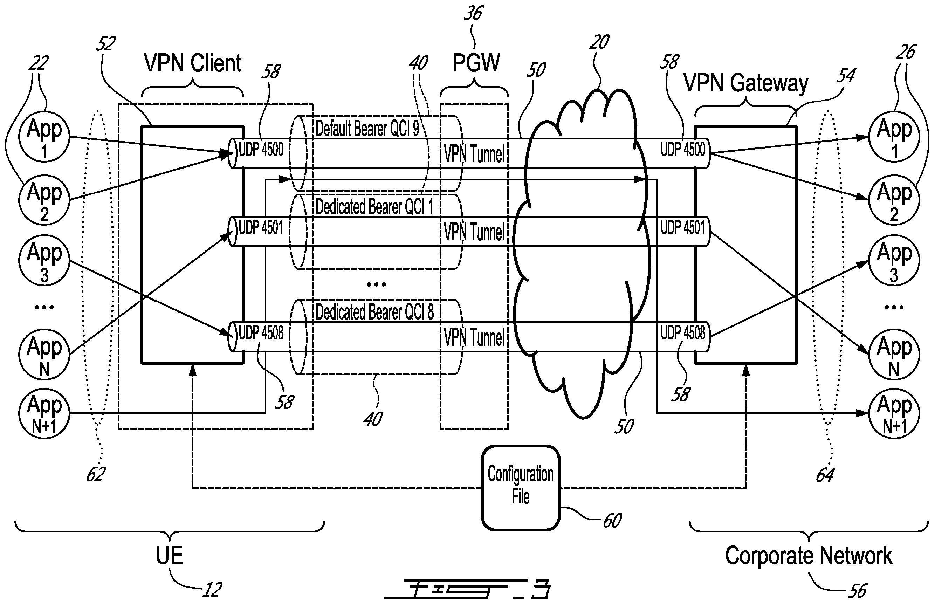

Referring now to Figure 3, as discussed above, the EPS bearers 40 can be used to support one or more VPN tunnels 50 established between a VPN client 52 executing on the UE 12 and a VPN gateway 54, for example located within a corporate network 56 or the like. As known in the art a VPN *inter alia* allows data to be encrypted between VPN Client 52 and VPN gateway 54 such that users can securely share data via unsecured public networks such as the Internet 20 and WiFi or the like. In a particular embodiment, and as will be described in more detail below, when a mobile application 22 wishes to communicate securely with an application server 24 via a VPN tunnel 50, the VPN client 52 establishes a plurality of VPN tunnels 50, one for each EPS bearer 40 interconnecting the UE 12 to the PGW 36. The VPN tunnels are established using the IP address assigned to the UE 12 by the PGW 36, the IP address of the VPN Gateway 54 and a known port 58 for each VPN tunnel. Illustratively port 4500 is assigned to the VPN tunnel 50 which is assigned to the default EPS bearer 40, port 4501 is assigned to the EPS bearer 40 associated with QCI 1, port 4502 is assigned to the EPS bearer 40 associated with QCI 2, and so on. This port is the same at both the VPN client 52 and the VPN gateway 54. As known in the art, and for example when using the Internet Protocol Security (IPSec) network protocol suite, a VPN tunnel 50 is established between the VPN client 52 and the VPN gateway 54 through mutual authentication and the negotiation of cryptographic keys (not shown), for example using Internet Key Exchange (IKE and IKEv2) which are used subsequently during any communication session to encrypt and decrypt transmitted data.

Still referring to Figure 3, in order to control the type of data communications/application 22 which may use a given one of the VPN tunnels 50, a configuration file 60 is shared between the VPN client 52 and the VPN gateway 54. The configuration file 60 comprises filters which are shared by a first routing function 62 in the UE 12 and a second routing function 64 in the gateway to associate a given data type for transmission via a given VPN tunnel 50. The configuration file 60 may be updated from time to time in order to redefine which data type may use which VPN tunnel 50. As such, a first application 22 communicating data of a first type with a first server application 24 via a first VPN tunnel 50 using dedicated EPS bearer 40 having QCI 8 may be redirected using an updated configuration file 60 to a second VPN tunnel 50 using a different dedicated EPS bearer 40 having QCI 9, thereby allowing the EPS bearer 40 having QCI 8 and the first VPN tunnel to be dropped without affecting secure transmission of data from the first application 22 to the first server application 24.

Still referring to Figure 3, in a particular embodiment at least one of said EPS bearers 40, and therefore its associated VPN tunnel 50, is dropped in response to network congestion.

## Claims

1. A tunnel filtering system (10) comprising:
a wireless network comprising at least one base station (16) and a packet data network gateway (36) interconnecting said wireless network to a public network (20);
at least one user equipment (12) comprising a Virtual Private Network, VPN, client (52) and at least one mobile application (22);
a wireless radio connection (14) interconnecting said at least user equipment and said base station;
an EPS session interconnecting each of said at least one user equipment and said packet data network gateway via said wireless radio connection, each of said of EPS sessions being identified by an IP address of said interconnected user equipment wherein each of said EPS sessions comprises a default EPS bearer (40) and a plurality of dedicated EPS bearers (40) identified by an EPS bearer ID;
a VPN gateway (54) connected to said public network and comprising a gateway IP address; and
at least one application server (24) comprising at least one server application (26);
wherein
a plurality of VPN tunnels (50) interconnect each of said VPN client with said VPN gateway, each of said VPN tunnels comprising a user equipment IP address, a VPN gateway IP address and a known port (58), wherein data transmission via one of said VPN tunnels is supported by an associated one of said EPS bearers; and
a set of filters (60) are shared between a first routing function in each of said at least one user device and a second routing function in said VPN gateway, each of said filters being used by said first and second routing functions to direct a particular one of a plurality of data types to a first specified one of said plurality of VPN tunnels;
wherein a communicating one of said at least one mobile application communicates data of said particular data type with a communicating one of said at least one server application via said first specified VPN tunnel and a first associated EPS bearer and further wherein when said first associated EPS bearer and said first specified VPN tunnel are no longer available, at least one of said filters is modified such that said particular data type is associated with a second specified one of said VPN tunnels wherein said communicating mobile application communicates said data of said particular data type subsequently with said communicating server application via said second specified VPN tunnel and a second associated EPS bearer.

2. The tunnel filtering system of Claim 1, wherein said first associated EPS bearer and said specified VPN tunnel are no longer available due to congestion.

3. The tunnel filtering system of Claim 1, comprising a plurality of said at least one mobile application and wherein each of said plurality of mobile applications transmits data of a different one of said data types and via a different one of said VPN tunnels.

4. A method for securely interconnecting at least one mobile application (22) executing on a mobile device (12) comprising a Virtual Private Network, VPN, client (52) with an application server (24) via a wireless radio connection (14) established between the mobile device and a base station (16) of a wireless network comprising a packet data network gateway (36) interconnecting said wireless network to a public network (20) comprising a VPN gateway (54) comprising a gateway IP address, wherein the method comprises:
opening an EPS session interconnecting the mobile device and the packet data network gateway via the wireless radio connection, each of said EPS sessions being identified by an IP address of the interconnected user equipment wherein each of said EPS sessions comprises a default EPS bearer (40) and a plurality of dedicated EPS bearers (40) identified by an EPS bearer ID;
establishing a plurality of VPN tunnels (50) between the VPN client and the VPN gateway, each of said VPN tunnels comprising a user equipment IP address, the gateway IP address and a known port (58) wherein data transmission via one of said VPN tunnels is provided between the mobile device and the packet data network gateway by a respective one of the EPS bearers;
sharing a set of filters (60) between a first routing function in the mobile device and a second routing function in the VPN gateway, each of said filters being used by said first and second routing functions to direct a particular data type to a first specified one of said plurality of VPN tunnels;
transmitting data of said particular data type between the mobile application and the application server using said first specified VPN tunnel;
modifying at least one of said filters such that said particular data type is directed to a second specified one of said VPN tunnels; and
transmitting data of said particular data type between the mobile application and the application server using said second specified VPN tunnel.

5. The method of Claim 4, further comprising, prior to said opening act, the act of authenticating the mobile device via the wireless network.

6. A non-transitory computer readable medium storing a program causing a microprocessor to execute a process on a mobile device (12) comprising a storage device, a Virtual Private Network, VPN, client (52) with an application server (24) via a wireless radio connection established between the mobile device and a base station (16) of a wireless network comprising a packet data network gateway (36) interconnecting said wireless network to a public network (20) comprising a VPN gateway (54) comprising a gateway IP address, wherein the process comprises:
opening an EPS session interconnecting the mobile device and the packet data network gateway via the wireless radio connection, each of said EPS sessions being identified by an IP address of the interconnected user equipment wherein each of said EPS session comprises a default EPS bearer (40) and a plurality of dedicated EPS bearers (40) identified by an EPS bearer ID;
establishing a plurality of Virtual Private Network, VPN, tunnels (50) between the VPN client and the VPN gateway, each of said VPN tunnels comprising a user equipment IP address, the gateway IP address and a known port (58) wherein data transmission via one of said VPN tunnels is provided between the mobile device and the packet data network gateway by a respective one of the EPS bearers;
storing a set of shared filters (60) in the storage device, each of said filters directing a particular data type to a first specified one of said plurality of VPN tunnels;
routing data of said particular data type for transmission between the mobile application and the application server according to said filters to said first specified VPN tunnel;
modifying at least one of said filters such that said particular data type is directed to a second specified one of said VPN tunnels; and
routing data of said particular data type for transmission between the mobile application and the application server according to said filters to said second specified VPN tunnel.

## Patentansprüche

1. Tunnelfiltersystem (10), das aufweist:
ein drahtloses Netzwerk, das mindestens eine Basisstation (16) und ein Paketdatennetzwerk-Gateway (36) aufweist, das das drahtlose Netzwerk mit einem öffentlichen Netzwerk (20) verbindet;
mindestens ein Benutzergerät (12), das einen virtuelles privates Netzwerk, VPN, Client (52) und mindestens eine mobile Anwendung (22) aufweist;
eine drahtlose Funkverbindung (14), die das mindestens eine Benutzergerät und die Basisstation miteinander verbindet;
eine EPS-Sitzung, die jedes des mindestens einen Benutzergeräts und das Paketdatennetzwerk-Gateway über die drahtlose Funkverbindung miteinander verbindet, wobei jede der EPS-Sitzungen durch eine IP-Adresse des verbundenen Benutzergeräts identifiziert wird, wobei jede der EPS-Sitzungen einen Standard-EPS-Träger (40) und mehrere dedizierte EPS-Träger (40) aufweist, die durch eine EPS-Träger-ID identifiziert werden;
ein VPN-Gateway (54), das mit dem öffentlichen Netzwerk verbunden ist und eine Gateway-IP-Adresse aufweist; und
mindestens einen Anwendungsserver (24), der mindestens eine Serveranwendung (26) aufweist;
wobei
mehrere VPN-Tunnel (50) jeden der VPN-Clients mit dem VPN-Gateway verbinden, wobei jeder der VPN-Tunnel eine IP-Adresse des Benutzergeräts, eine IP-Adresse des VPN-Gateways und einen bekannten Port (58) aufweist, wobei die Datenübertragung über einen der VPN-Tunnel durch einen assoziierten der EPS-Träger unterstützt wird; und
ein Satz von Filtern (60) zwischen einer ersten Routingfunktion in jedem des mindestens einen Benutzergeräts und einer zweiten Routingfunktion in dem VPN-Gateway gemeinsam genutzt wird, wobei jeder der Filter von der ersten und der zweiten Routingfunktion verwendet wird, um einen bestimmten von mehreren Datentypen zu einem ersten spezifizierten der mehreren VPN-Tunnel zu leiten;
wobei eine kommunizierende der mindestens einen mobilen Anwendung Daten des bestimmten Datentyps mit einer kommunizierenden der mindestens einen Serveranwendung über den ersten spezifizierten VPN-Tunnel und einen ersten assoziierten EPS-Träger kommuniziert, und wobei ferner, wenn der erste assoziierte EPS-Träger und der erste spezifizierte VPN-Tunnel nicht mehr verfügbar sind, mindestens einer der Filter so modifiziert wird, dass der bestimmte Datentyp mit einem zweiten spezifizierten der VPN-Tunnel assoziiert wird, wobei die kommunizierende mobile Anwendung die Daten des bestimmten Datentyps anschließend mit der kommunizierenden Serveranwendung über den zweiten spezifizierten VPN-Tunnel und einen zweiten assoziierten EPS-Träger kommuniziert.

2. Tunnelfiltersystem nach Anspruch 1, wobei der erste assoziierte EPS-Träger und der spezifizierte VPN-Tunnel aufgrund von Überlastung nicht mehr verfügbar sind.

3. Tunnelfiltersystem nach Anspruch 1, das mehrere der mindestens einen mobilen Anwendung aufweist, wobei jede der mehreren mobilen Anwendungen Daten eines anderen der Datentypen und über einen anderen der VPN-Tunnel überträgt.

4. Verfahren zum sicheren Verbinden mindestens einer mobilen Anwendung (22), die auf einem mobilen Gerät (12) ausgeführt wird, das einen virtuelles privates Netzwerk, VPN, Client (52) aufweist, mit einem Anwendungsserver (24) über eine drahtlose Funkverbindung (14), die zwischen dem mobilen Gerät und einer Basisstation (16) eines drahtlosen Netzwerks hergestellt wird, das ein Paketdatennetzwerk-Gateway (36) aufweist, das das drahtlose Netzwerk mit einem öffentlichen Netzwerk (20) verbindet, das ein VPN-Gateway (54) aufweist, das eine Gateway-IP-Adresse aufweist, wobei das Verfahren aufweist:
Eröffnen einer EPS-Sitzung, die das mobile Gerät und das Paketdatennetzwerk-Gateway über die drahtlose Funkverbindung miteinander verbindet, wobei jede der EPS-Sitzungen durch eine IP-Adresse des verbundenen Benutzergeräts identifiziert wird, wobei jede der EPS-Sitzungen einen Standard-EPS-Träger (40) und mehrere dedizierte EPS-Träger (40) aufweist, die durch eine EPS-Träger-ID identifiziert werden;
Herstellen von mehreren VPN-Tunneln (50) zwischen dem VPN-Client und dem VPN-Gateway, wobei jeder der VPN-Tunnel eine IP-Adresse des Benutzergeräts, die IP-Adresse des Gateways und einen bekannten Port (58) aufweist, wobei die Datenübertragung über einen der VPN-Tunnel zwischen dem mobilen Gerät und dem Paketdatennetzwerk-Gateway durch einen jeweiligen der EPS-Träger bereitgestellt wird;
gemeinsames Nutzen eines Satzes von Filtern (60) zwischen einer ersten Routingfunktion in dem mobilen Gerät und einer zweiten Routingfunktion in dem VPN-Gateway, wobei jeder der Filter von der ersten und der zweiten Routingfunktion verwendet wird, um einen bestimmten Datentyp zu einem ersten spezifizierten der mehreren VPN-Tunnel zu leiten;
Übertragen von Daten des bestimmten Datentyps zwischen der mobilen Anwendung und dem Anwendungsserver unter Verwendung des ersten spezifizierten VPN-Tunnels;
Modifizieren mindestens eines der Filter, so dass der bestimmte Datentyp zu einem zweiten spezifizierten der VPN-Tunnel geleitet wird; und
Übertragen von Daten des bestimmten Datentyps zwischen der mobilen Anwendung und dem Anwendungsserver unter Verwendung des zweiten spezifizierten VPN-Tunnels.

5. Verfahren nach Anspruch 4, das ferner vor dem Eröffnungsvorgang den Vorgang des Authentifizierens des mobilen Geräts über das drahtlose Netzwerk aufweist.

6. Nichtflüchtiges computerlesbares Medium, das ein Programm speichert, das einen Mikroprozessor veranlasst, einen Prozess auf einem mobilen Gerät (12) auszuführen, das eine Speichervorrichtung, einen virtuelles privates Netzwerk, VPN, Client (52) mit einem Anwendungsserver (24) über eine drahtlose Funkverbindung aufweist, die zwischen dem mobilen Gerät und einer Basisstation (16) eines drahtlosen Netzwerks hergestellt wird, das ein Paketdatennetzwerk-Gateway (36) aufweist, das das drahtlose Netzwerk mit einem öffentlichen Netzwerk (20) verbindet, das ein VPN-Gateway (54) aufweist, das eine Gateway-IP-Adresse aufweist, wobei der Prozess aufweist:
Eröffnen einer EPS-Sitzung, die das mobile Gerät und das Paketdatennetzwerk-Gateway über die drahtlose Funkverbindung miteinander verbindet, wobei jede der EPS-Sitzungen durch eine IP-Adresse des verbundenen Benutzergeräts identifiziert wird, wobei jede der EPS-Sitzungen einen Standard-EPS-Träger (40) und mehrere dedizierte EPS-Träger (40) aufweist, die durch eine EPS-Träger-ID identifiziert werden;
Herstellen von mehreren virtuelles privates Netzwerk, VPN, Tunneln (50) zwischen dem VPN-Client und dem VPN-Gateway, wobei jeder der VPN-Tunnel eine IP-Adresse des Benutzergeräts, die IP-Adresse des Gateways und einen bekannten Port (58) aufweist, wobei die Datenübertragung über einen der VPN-Tunnel zwischen dem mobilen Gerät und dem Paketdatennetzwerk-Gateway durch einen jeweiligen der EPS-Träger bereitgestellt wird;
Speichern eines Satzes von gemeinsam genutzten Filtern (60) in der Speichervorrichtung, wobei jeder der Filter einen bestimmten Datentyp zu einem ersten spezifizierten der Vielzahl von VPN-Tunneln leitet;
Leiten von Daten des bestimmten Datentyps zur Übertragung zwischen der mobilen Anwendung und dem Anwendungsserver gemäß den Filtern zu dem ersten spezifizierten VPN-Tunnel;
Modifizieren mindestens eines der Filter, so dass der bestimmte Datentyp zu einem zweiten spezifizierten der VPN-Tunnel geleitet wird; und
Leiten von Daten des bestimmten Datentyps zur Übertragung zwischen der mobilen Anwendung und dem Anwendungsserver gemäß den Filtern zu dem zweiten spezifizierten VPN-Tunnel.

## Revendications

1. Système de filtrage par tunnel (10), comprenant :
un réseau sans fil comprenant au moins une station de base (16) et une passerelle de réseau de données par paquets (36) connectant le réseau sans fil à un réseau public (20) ;
au moins un équipement utilisateur (12) comprenant un client de réseau privé virtuel, VPN (52), et au moins une application mobile (22) ;
une connexion radio sans fil (14) connectant ledit au moins un équipement utilisateur et la station de base ;
une session EPS connectant ledit au moins un équipement utilisateur et la passerelle de réseau de données par paquets via la connexion radio sans fil, chaque session EPS étant identifiée par une adresse IP de l'équipement utilisateur connecté, chaque session EPS comprenant une porteuse EPS par défaut (40) et une pluralité de porteuses EPS dédiées (40) identifiées par un identifiant de porteuse EPS ;
une passerelle VPN (54) connectée au réseau public et comprenant une adresse IP de passerelle ; et
au moins un serveur d'application (24) comprenant au moins une application de serveur (26) ;
où
une pluralité de tunnels VPN (50) connectent chaque client VPN avec la passerelle VPN, chaque tunnel VPN comprenant une adresse IP d'équipement utilisateur, une adresse IP de passerelle VPN et un port connu (58), la transmission de données via l'un des tunnels VPN étant assistée par une des porteuses EPS associée ; et où un ensemble de filtres (60) est partagé entre une première fonction de routage dans chacun desdits au moins un dispositif utilisateur et une deuxième fonction de routage dans la passerelle VPN, chaque filtre étant utilisé par la première et la deuxième fonctions de routage pour diriger un type particulier de données parmi une pluralité de types de données vers un premier tunnel VPN spécifié parmi la pluralité de tunnels VPN ;
où une application communicante parmi lesdites au moins une application mobile communique des données de ce type particulier de données avec une application communicante de ladite au moins une application de serveur via le premier tunnel VPN spécifié et une première porteuse EPS associée, et où, en outre, lorsque la première porteuse EPS associée et le premier tunnel VPN spécifié ne sont plus disponibles, au moins un des filtres est modifié de manière à associer le type particulier de données à un deuxième tunnel VPN spécifié, l'application mobile communicante communiquant ensuite les données de type particulier de données à l'application de serveur communicante via le deuxième tunnel VPN spécifié et une deuxième porteuse EPS associée.

2. Système de filtrage par tunnel selon la revendication 1, où la première porteuse EPS associée et le tunnel VPN spécifié ne sont plus disponibles pour cause de congestion.

3. Système de filtrage par tunnel selon la revendication 1, comprenant une pluralité desdites au moins une application mobile, et où chaque application de la pluralité d'applications mobiles transmet des données d'un type de données différent et via un tunnel VPN différent.

4. Procédé de connexion sécurisée d'au moins une application mobile (22) exécutée sur un dispositif mobile (12) comprenant un client de réseau privé virtuel, VPN (52), avec un serveur d'application (24) via une connexion radio sans fil (14) établie entre le dispositif mobile et une station de base (16) d'un réseau sans fil comprenant une passerelle de réseau de données par paquets (36) connectant le réseau sans fil à un réseau public (20) comprenant une passerelle VPN (54) présentant une adresse IP de passerelle, ledit procédé comprenant :
l'ouverture d'une session EPS connectant le dispositif mobile et la passerelle de réseau de données par paquets via la connexion radio sans fil, chaque session EPS étant identifiée par une adresse IP de l'équipement utilisateur connecté, chaque session EPS comprenant un porteuse EPS par défaut (40) et une pluralité de porteuses EPS dédiées (40) identifiées par un ID de porteuse EPS ;
l'établissement d'une pluralité de tunnels de réseau privé virtuel, VPN (50), entre le client VPN et la passerelle VPN, chaque tunnel VPN comprenant une adresse IP d'équipement utilisateur, l'adresse IP de passerelle et un port connu (58), la transmission de données via un des tunnels VPN étant assurée entre le dispositif mobile et la passerelle de réseau de données par paquets par une porteuse respective parmi les porteuses EPS ;
le partage d'un ensemble de filtres (60) entre une première fonction de routage dans le dispositif mobile et une deuxième fonction de routage dans la passerelle VPN, chaque filtre étant utilisé par la première et la deuxième fonctions de routage pour diriger un type particulier de données vers un premier tunnel VPN spécifié de la pluralité de tunnels VPN ;
la transmission de données de type particulier entre l'application mobile et le serveur d'application au moyen du premier tunnel VPN spécifié ;
la modification d'au moins un des filtres de manière à diriger le type particulier de données vers un deuxième tunnel spécifié parmi les tunnels VPN ; et
la transmission de données de type particulier entre l'application mobile et le serveur d'application au moyen du deuxième tunnel VPN spécifié.

5. Procédé selon la revendication 4, comprenant en outre, avant l'opération d'ouverture, l'opération d'authentification du dispositif mobile via le réseau sans fil.

6. Support d'enregistrement non transitoire lisible par ordinateur, stockant un programme entraînant l'exécution par un microprocesseur d'un processus sur un dispositif mobile (12) comprenant un dispositif de stockage, un client de réseau privé virtuel, VPN (52), avec un serveur d'application (24), via une connexion radio sans fil établie entre le dispositif mobile et une station de base (16) d'un réseau sans fil comprenant une passerelle de réseau de données par paquets (36) connectant le réseau sans fil à un réseau public (20) comprenant une passerelle VPN (54) présentant une adresse IP de passerelle, ledit processus comprenant :
l'ouverture d'une session EPS connectant le dispositif mobile et la passerelle de réseau de données par paquets via la connexion radio sans fil, chaque session EPS étant identifiée par une adresse IP de l'équipement utilisateur connecté, chaque session EPS comprenant un porteuse EPS par défaut (40) et une pluralité de porteuses EPS dédiées (40) identifiées par un identifiant de porteuse EPS ;
l'établissement d'un pluralité de tunnels de réseau privé virtuel (50) entre le client VPN et la passerelle VPN, chaque tunnel VPN comprenant une adresse IP d'équipement utilisateur, l'adresse IP de passerelle et un port connu (58), la transmission de données via un des tunnels VPN étant assurée entre le dispositif mobile et la passerelle de réseau de données par paquets par une porteuse respective parmi les porteuses EPS ;
le mémorisation d'un ensemble de filtres partagés (60) dans le dispositif de stockage, chaque filtre dirigeant un type particulier de données vers un premier tunnel VPN spécifié de la pluralité de tunnels VPN ;
le routage de données de type particulier pour transmission entre l'application mobile et le serveur d'application en fonction des filtres vers le premier tunnel VPN spécifié ;
la modification d'au moins un des filtres de manière à diriger le type particulier de données vers un deuxième tunnel spécifié parmi les tunnels VPN ; et
le routage de données de type particulier pour transmission entre l'application mobile et le serveur d'application en fonction des filtres vers le deuxième tunnel VPN spécifié.
